# EUROPEAN PATENT SPECIFICATION

(11) **EP 4 162 786 B1**
(45) Date of publication and mention of the grant of the patent: **01.10.2025**
(21) Application number: 22200482.2
(22) Date of filing: 10.10.2022
(51) Int. Cl.: A01D 34/30, A01D 34/56, A01D 34/76, A01D 69/00, F16D 41/06

(54) **DEVICE FOR THE ENGAGEMENT/DISENGAGEMENT OF THE POWER TRANSMISSION BETWEEN THE POWER INPUT AND THE POWER OUTPUT OF A LAWNMOWER, AND LAWNMOWER PROVIDED WITH SUCH A DEVICE**
VORRICHTUNG ZUM EIN- UND AUSKUPPELN DER KRAFTÜBERTRAGUNG ZWISCHEN DEM ANTRIEB UND DEM ABTRIEB EINES RASENMÄHERS UND RASENMÄHER MIT EINER SOLCHEN VORRICHTUNG
DISPOSITIF D'ENGAGEMENT/DÉSENGAGEMENT DE LA TRANSMISSION DE PUISSANCE D'UNE TONDEUSE À GAZON ET TONDEUSE À GAZON ÉQUIPÉE D'UN TEL DISPOSITIF

(30) Priority: 11.10.2021 IT 202100025970
(43) Date of publication of application: 12.04.2023
(73) Proprietor: Stiga S.p.A. in breve anche St. S.p.A., 31033 Castelfranco Veneto (TV) (IT)
(72) Inventor: DOTTA, ANDREA, 31047 Vicolo A.Prevedel 1 - Ponte di Piave (TV) (IT)
(74) Representative: Mittler, Andrea

(56) References cited:
- EP-B1- 1 384 881
- EP-B1- 3 219 190
- AU-A4- 2021 102 159
- CN-U- 201 733 611
- JP-A- H0 492 130
- TW-A- 201 129 310
- US-A1- 2002 121 258

## Description

The present invention relates to a device for the engagement/disengagement of the transmission between the power input and the power output of a lawnmower and to lawnmower provided with such a device.

In the prior art, there are known devices adapted to allow motion transmission between a power input, i.e., a thermal or electric motor or a shaft or still another mechanical component which draws power from a third source, and a power output, i.e., a mechanical component which provides said power to the user machine, scaled to the required torque and rotation speed, usually consisting of a shaft possibly also moved by the last toothed wheel of a reduction gear.

A known saw tooth engagement system consists of two halves, a first toothed wheel and a second toothed wheel, which are usually separated but self-engaging when power is applied to the system. The second toothed wheel is integral with a shaft while the first toothed wheel is axially free. The operation of the system implies that the power is transmitted from a first wheel to a second wheel to rotate it. The aforesaid wheel is provided with shaped cavities in which profiles obtained on the first toothed wheel are inserted. When there is a rotation, the profiles are pushed axially due to the onset of an axial component of the force at the point of contact. The induced axial force is such as to overcome the force of a spring, bringing the two halves of the engagement closer to each other, which close and allow motion transmission.

EP-1384881 describes a motor starting device, comprising a neutral element between a first rotatable element connected to a power source, and a second rotatable element connected to a motor to be started.

AU-2021102159 describes a device for the engagement/disengagement of the power transmission between the power input and the power output of a lawnmower. The device comprises a first rotatable element connected to the power input, a second rotatable element connected to the power output, and a neutral element arranged between said first and said second rotatable elements.

In view of the prior art, it is the object of the present invention to provide a device for the engagement/disengagement of the power transmission between the power input and the power output of a lawnmower which is different from those known.

According to the present invention, said object is achieved by a device for the engagement/disengagement of the power transmission between the power input and the power output of a lawnmower, as defined in claim 1.

By virtue of the present invention it is possible to provide a device for the engagement/disengagement of the power transmission between the power input and the power output of a lawnmower which allows the power transmission in one direction only, i.e., from the power input towards the power output. If required, it may clearly be installed inverted, thus allowing motion transmission in the opposite direction.

The aforesaid device facilitates the movement of the lawnmower, for example a pedestrian-controlled lawnmower provided with a small electric or mechanical traction, by a user, since a certain power is made to flow from a primary source to the wheels in the form of suitable torque and rotation speed. The adaptation and the power flow are conveyed by the traction unit itself. In fact, if the traction unit were without the aforesaid device according to the invention, there would be a non-interruptible motion transmission chain between all the members of the internal traction transmission chain, from the power input of the latter to the outlet thereof, here coinciding with the axis of the wheels of the lawnmower. It would not be possible in any manner to release the motion of the lawnmower wheels from that of the power input. If this is acceptable during the advancement step of the lawnmower, i.e., during the normal use thereof, it is not when the power input is stopped on command, for example to drag the lawnmower backwards or to push it manually. In fact, since the wheels are not released from the other members of the transmission chain, they - rotating by contact with the ground - should drag all the remaining components of the chain itself into motion, overcoming the friction/resistance thereof and making the user put an unnecessary effort for the purposes of the action he/she is performing.

This additional effort is present precisely by virtue of the establishment of an inverted power flow, in this case from the wheels to the primary power source, the appearance of which is to be avoided.

Advantageously, when the device is engaged, the power output is continuous, i.e., the traction power supplied to the traction wheels of the lawnmower is continuous until the power input is interrupted.

The features and advantages of the present invention will become apparent from the following detailed description of a practical embodiment thereof, shown by way of non-limiting example in the accompanying drawings, in which:
Figure 1 is an exploded view of a traction in which a power input, a power output and a device for the engagement/disengagement of the power transmission between the power input and the power output of a lawnmower in accordance with the present invention are shown;
Figures 2 and 3 show in greater detail the device for the engagement/disengagement of the transmission between the power input and the power output of a lawnmower according to a first embodiment of the present invention;
Figure 4 diagrammatically shows the device in Figures 2 and 3 in the engagement step;
Figure 5 diagrammatically shows the device in Figures 2 and 3 in the disengagement step;
Figure 6 shows the device in Figures 2 and 3 in the initial condition;
Figures 7 and 8 show the device in Figure 6 in the initial (Figure 7) and final (Figure 8) engagement steps;
Figures 9 and 10 show the device in Figure 6 in the initial (Figure 9) and final (Figure 10) disengagement steps;
Figures 11 and 12 show in greater detail the device for the engagement/disengagement of the transmission between the power input and the power output of a lawnmower according to a second embodiment of the present invention;
Figure 13 diagrammatically shows a part of the device in Figures 11 and 12;
Figure 14 diagrammatically shows the device in Figures 11 and 12 in the engagement step, with the triangles of forces generated during the engagement step highlighted, triangles which are valid for any embodiment of the device;
Figure 15 shows in greater detail the device in Figures 11 and 12;
Figures 16-18 show the device in Figure 15 during the initial (Figure 16), intermediate (17) and final (Figure 18) engagement steps;
Figures 19 and 20 show the device in Figure 16 in the initial (Figure 19) and final (Figure 20) disengagement steps.

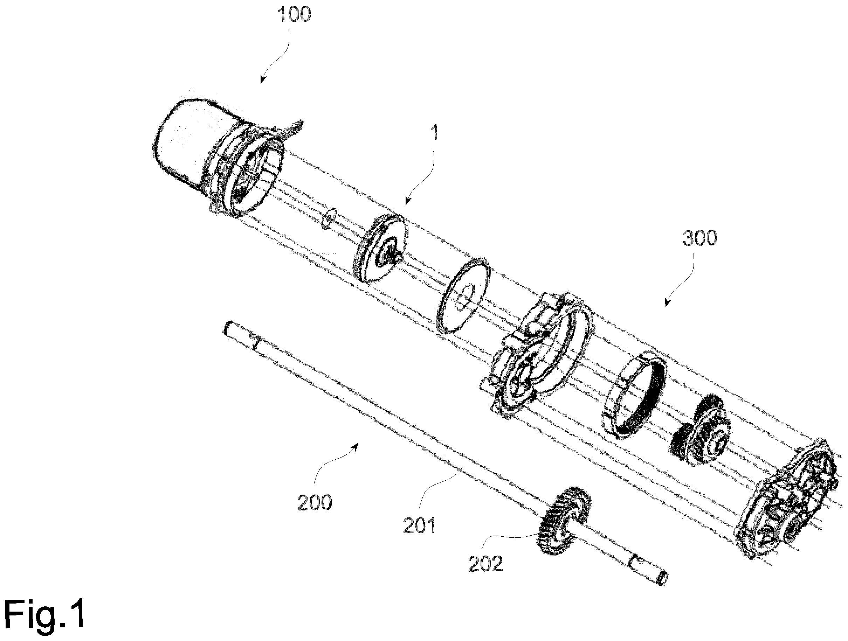

Figure 1 shows a part of a lawnmower, in particular a traction unit, comprising a power input device 100, a power output device 200 and the device 1 for the engagement/disengagement of the transmission between the power input device 100 and the power output device 200. Figure 1 shows an electric motor as the power input device 100, but it may alternatively consist of a thermal motor or a shaft adapted to receive, in turn, power from another source. Again in Figure 1, a shaft 201 provided with a toothed wheel 202 and a reduction gear 300 for the movement thereof is shown as the power output device 200.

The device 1 is inserted inside the traction unit, in an intermediate position between the power input device 100 and the power output device 200, in particular, it is positioned before the gear reduction stages which are required to multiply the input torque up to the output values required by the lawnmower where the traction unit is installed; however, the device 1 may occupy any position between the input 100 and the output 200.

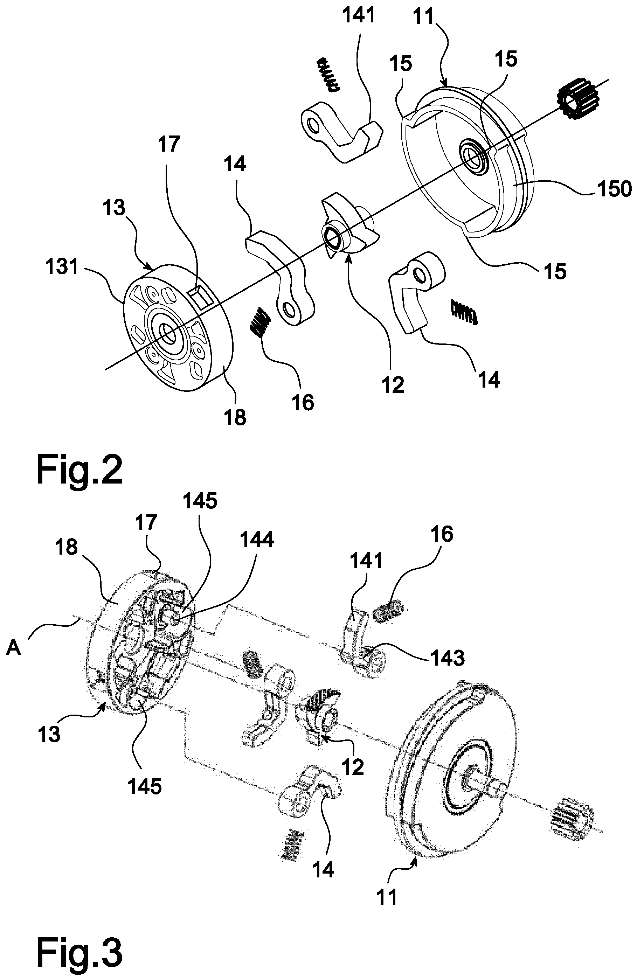

The device 1 is configured to automatically engage/disengage the power transmission between the power input 100 and the power output 200. As better shown in Figures 2 and 3 according to a first embodiment of the invention, the device 1 comprises a first rotatable element 12 connected to the power input 100, a second rotatable element 11 connected to the power output 200 and a neutral element 13 arranged between said first and said second rotatable elements. The neutral element 13 is configured to transmit the rotation from the first rotatable element 12 to the second rotatable element 11 when the first rotatable element is powered for rotation from the power input 100; the neutral element 13 is configured to prevent the rotation transmission between the first and second rotatable elements in the absence of power supply for the rotation from the power input.

As shown in Figures 2 and 3, the second rotatable element 11 is of the wheel type and is integral with the first toothed wheel of the reduction gear 300 which moves the power output device 200. The element 11 may also be connected directly to the shaft 201 of the device 200 if the reduction unit is absent from the output device 200; the element 11 is hollow inside to accommodate the other elements of the device 1.

The first rotatable element 12 is preferably a lobe cam, still preferably a three-lobe cam, connected in rotation to the power input device 100, preferably integral with the power input device, thus being capable of rotating at the same angular speeds as the device 100 itself, or at different speeds if integral with elements reducing or amplifying the rotation of the device 100.

The neutral element 13 comprises a circular support 131, which is also hollow therein to accommodate the other elements of the device 1. The element 13 is usually neutral with respect to both the wheel element 11 and the three-lobe cam 2, and it is intended to remain so until some power flow enters the device 1 from the side of the power input. Preferably, the element 13 is such as to be arranged inside the hollow part of the wheel element 11.

The circular support 131 contains elements of the C-shaped type 14, hinged inside the support 131 by means of pivots or pins 144 and, at rest, completely contained in suitable compartments 145 obtained in the support 131 itself. The C-shaped elements 14, also referred to as engagement pins, are adapted to engage suitable internal protuberances or protrusions or geometries 15 of the wheel element 11 when a power flow is established from the input 100 to the output 200, thus ensuring engagement and motion transmission. As shown in Figures 2 and 3, the protuberances 15 extend in a mainly radial manner with a profile which extends on a plane perpendicular to the rotation axis A of the three-lobe cam 12 and the C-shaped elements 14 are hinged on the support 131 so as to be movable on a plane orthogonal to the axis itself. The circular support 131 is also provided with holes 17 on the side wall 18 thereof, to allow the passage of the free ends 141 of the C-shaped elements 14 outside the element 13.

Compression springs 16 are also inside the circular support 131, the task of which is to facilitate the return of the C-shaped elements 14 into the suitable compartments 145 of the element 13 when the power flow from the input to the output is interrupted, thus allowing the disengagement action. The device 1 comprises as many springs as there are C-shaped elements 14, one for each C-shaped element. Each spring 16 has one end integral with the inner part of the side wall 18 of the support 131 and the other integral with the inner part of the C of the C-shaped element 14, thus generating the action on the C-shaped element required to return it to the aforesaid compartments during disengagement. In the particular case in which only two engagement elements are present, a single spring capable of acting simultaneously on both engagement elements may be sufficient.

The element 11 is provided with a side wall 150 adapted to cooperate with said elastic means to disengage the C-shaped elements 14 from the protrusions 15 in the absence of power supply for rotation from the power input; the wall 150 preferably has portions 151 with a curvilinear shape between two internal protrusions 15. Each internal protrusion 15 of the element 11 comprises a wall with a suitable inclination 152 on which the free end 141 of the C-shaped element 14 abuts. Each curvilinear portion 151 has an increasing distance from the center, in which the rotation axis A passes, from the innermost end of a protrusion 15 to the outermost end of the next protrusion 15 following a counterclockwise course.

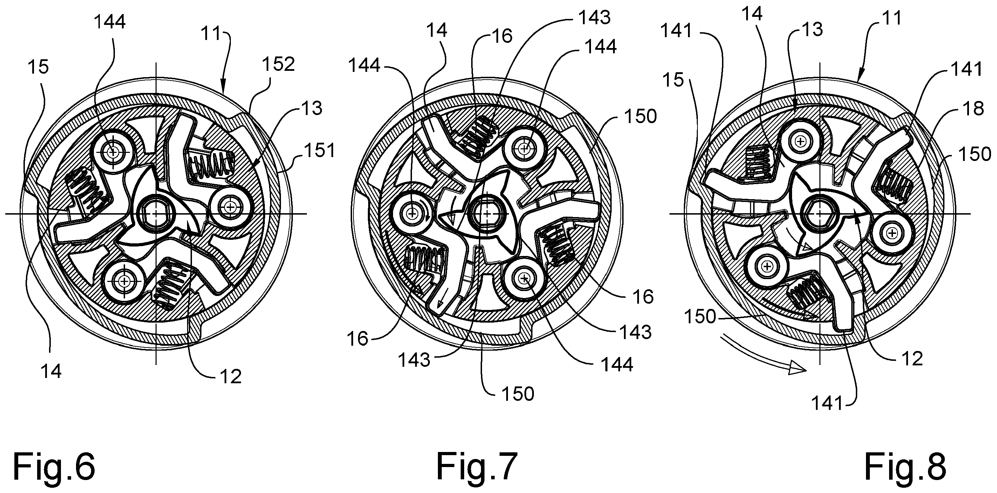

The device 1 in use is configured with the element 13 inserted into the wheel element 11, as shown in Figures 6-10.

The device 1 for the engagement/disengagement of the transmission between the power input device 100 and the power output device 200 is configured so as to allow the motion transmission in a single clockwise or counterclockwise direction and only from the device 100 to the device 200 and not vice versa.

In general, the device 1 for the engagement/disengagement of the transmission between the power input device 100 and the power output device 200 engages automatically and autonomously if energy arrives from the power input device 100 in the form of torque at a certain rotation speed. The device remains engaged as long as energy continues to arrive from the power input 100, thus allowing the motion transmission towards the power output device 200. The device 1 autonomously and automatically disengages in the instant in which this flow of energy from the power input should be interrupted, thus also interrupting the possibility of any motion transmission towards the output. In the absence of energy from the input, device 1 remains disengaged, even if the power output is induced in motion by the user. There is therefore no inverted power flow from the output to the input, i.e., from the device 200 to the device 100.

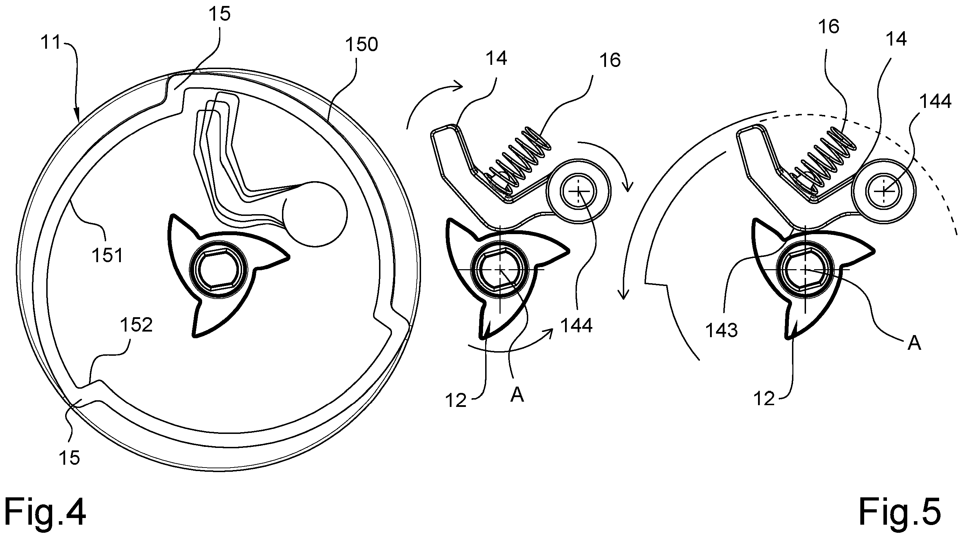

In particular, from a resting step (Figure 6) in the engagement step (Figure 7) an energy flow is activated from the power input device 100. The three-lobe cam 12, integral with the power input device 100, starts to rotate. At the same time, the wheel element 13 remains stationary, by inertia thereof and by virtue of the balancing of the moments due to all the forces involved, i.e., the force of the springs 16, the actions on the support pins 144 of the C-shaped elements 14 and the friction (as better shown in Figures 4 and 5). Thereby, the lobes of the cam 12, which rotates with clockwise rotation, act on suitable profiles 143 obtained on the C-shaped elements 14 by applying a force to rotate them in accordance with a direction, for example counterclockwise with respect to the support pin 144 thereof and overcoming the contrasting action of the springs 16. Thereby, the free ends 141 of the C-shaped elements 14 protrude from the respective holes 17 of the side wall 18.

At the same time, the element 13 begins to rotate since the configuration of the moments which govern the rotation thereof changes, and also drags in rotation therewith the C-shaped elements 14 the free ends 141 of which slide on the side wall 150 of the wheel element 11, which it is still stationary, until it abuts against the internal protuberances 15 (Figure 8). When this configuration has been achieved, all components lock together, becoming a single piece, integral with one another: the motion transmission becomes effective.

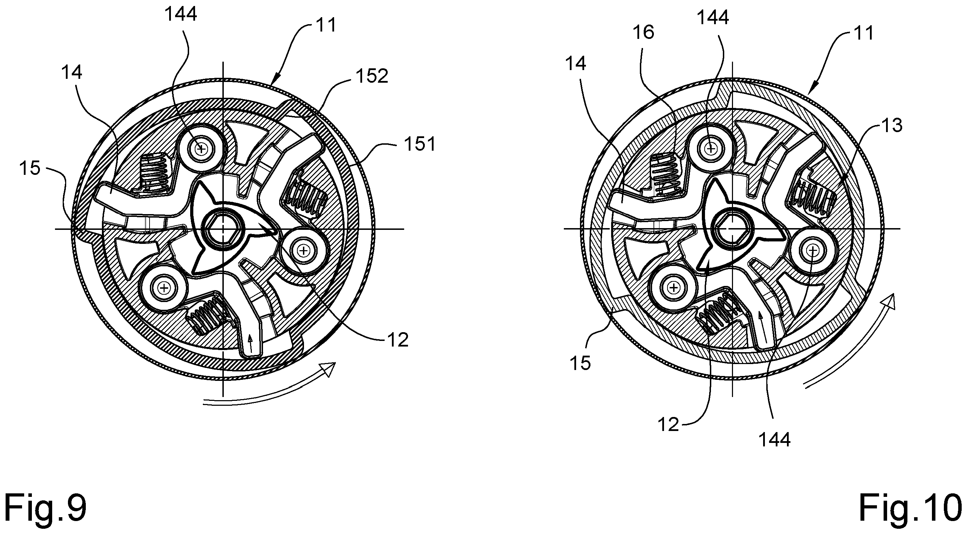

The disengagement function occurs automatically when the flow of energy from the power input device 100 is interrupted (Figure 9). In fact, when this occurs, the three-lobe cam 12 stops, since it is integral with the power input device 100. The three-lobe cam 12 stops acting on the C-shaped elements 14, allowing them to return from the hole 17. In fact, the wheel element 11 continues to rotate since it is connected by means of form coupling (gears or - where absent - keying on the output member) with the wheels of the machine, which, by inertia, tends to proceed in the motion thereof, also pulling the wheel element 11. Once the action of the three-lobe cam 12 is absent, both by means of the action of the side wall 18 of the wheel element 11 combined with the counterclockwise rotation of the wheel element 11 itself and by means of the releasing action of the springs 16, the C-shaped elements 14 are pushed towards the inside of the element 13 in the suitable compartments thereof (Figure 10). Disengagement is complete.

The springs 16 help to avoid unwanted engagements when there is no flow of energy from the power input: for example, due to jolts, vibrations, etc. This, regardless of the advancement direction of the machine.

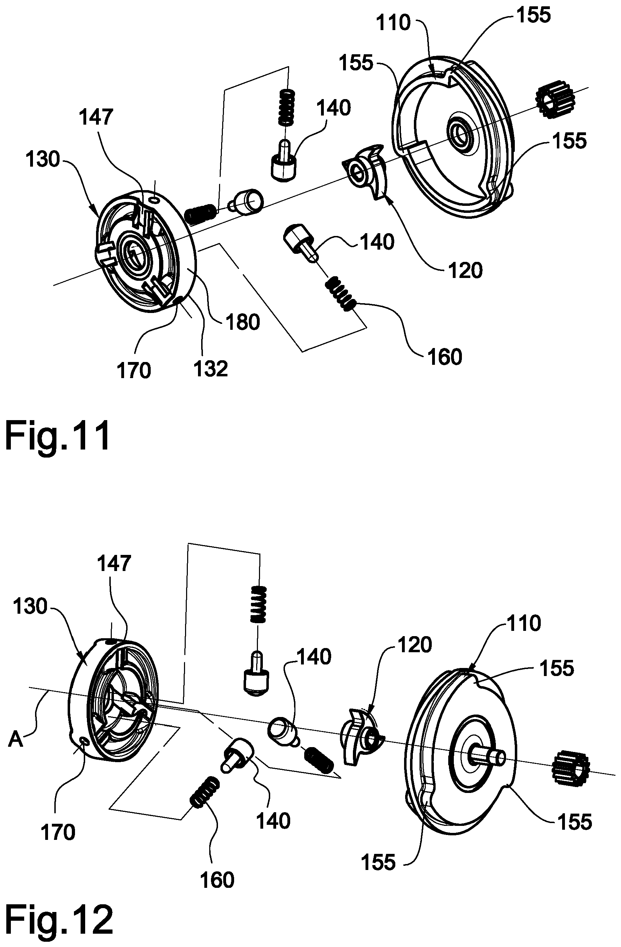

As better shown in Figures 11-20 according to the second embodiment of the invention, the device 1 comprises a first rotatable element 120 connected to the power input 100, a second rotatable element 110 connected to the power output 200 and a neutral element 130 arranged between said first and said second rotatable elements. The neutral element 130 is configured to transmit the rotation from the first rotatable element 120 to the second rotatable element 110 when the first rotatable element is powered for rotation from the power input 100; the neutral element 13 is configured to prevent the rotation transmission between the first and second rotatable elements in the absence of power supply for the rotation from the power input.

As shown in Figures 11-20, the second rotatable element 110 is of the wheel type and is integral with the first toothed wheel of the reduction gear 300 which moves the power output device 200. The element 110 may also be connected directly to the shaft 201 of the device 200 if the reduction unit is absent from the output device 200; the element 110 is hollow inside to accommodate the other elements of the device 1.

The first rotatable element 120 is preferably a lobe cam, again preferably a three-lobe cam, integral with the power input device 100, with respect to which it is connected integrally to the rotation, thus being capable of rotating at the same angular speeds as the device 100 itself.

The neutral element 130 comprises a circular support 132, which is also hollow therein to accommodate the other elements of the device 1. The element 130 is usually neutral with respect to both the wheel element 110 and the three-lobe cam 120, and it is intended to remain so until some power flow enters the device 1 from the side of the power input. Preferably, the element 130 is such as to be arranged inside the hollow part of the wheel element 110.

The circular support 132 contains I-shaped elements 140, arranged inside suitable compartments 147 obtained in the support 132 and, at rest, completely contained in said suitable compartments 147. The I-shaped elements 140, also referred to as engagement pins, are adapted to engage suitable internal protuberances or protrusions or geometries 155 of the wheel element 110 when a power flow is established from the input 100 to the output 200, thus ensuring engagement and motion transmission. As shown in Figures 11 and 12, the protuberances 155 extend in a mainly radial manner with a profile which extends on a plane perpendicular to the rotation axis A of the three-lobe cam 120 and the I-shaped elements 140 are arranged on the support 132 so as to be movable on a plane orthogonal to the axis itself. The circular support 132 is also provided with holes 170 on the side wall 180 thereof, to allow the passage of the free ends 146 of the elements 140 outside the element 130.

Compression springs 160 are also inside the circular support 132, the task of which is to facilitate the return of the elements 140 into the suitable compartments 147 of the element 130 when the power flow from the input to the output is interrupted, thus allowing the disengagement action. The device 1 comprises as many springs as there are elements 140, one for each element 140. Each spring 160 has one end integral with the inner part 148 of the compartment 147 of the support 132 and the other integral with the body, preferably in the central part, of the I-shaped element 140, thus generating the action on the element 140 required to return it to the aforesaid compartment 147 during disengagement. In the particular case in which only two engagement elements are present, a single spring capable of acting simultaneously on both engagement elements may be sufficient.

The element 110 is provided with an inner side wall 156 adapted to cooperate with said elastic means 160 to disengage the C-shaped elements 140 from the protrusions 155 in the absence of power supply for the rotation from the power input; the wall 156 preferably has portions 157 with a curvilinear shape between two internal protrusions 155. Each internal protrusion 155 of the element 110 comprises a wall with a suitable inclination 158 on which the free end 146 of the element 140 abuts. Each curvilinear portion 157 has an increasing distance from the center, in which the rotation axis A passes, from the innermost end of a protrusion 155 to the outermost end of the next protrusion 155 following a counterclockwise course.

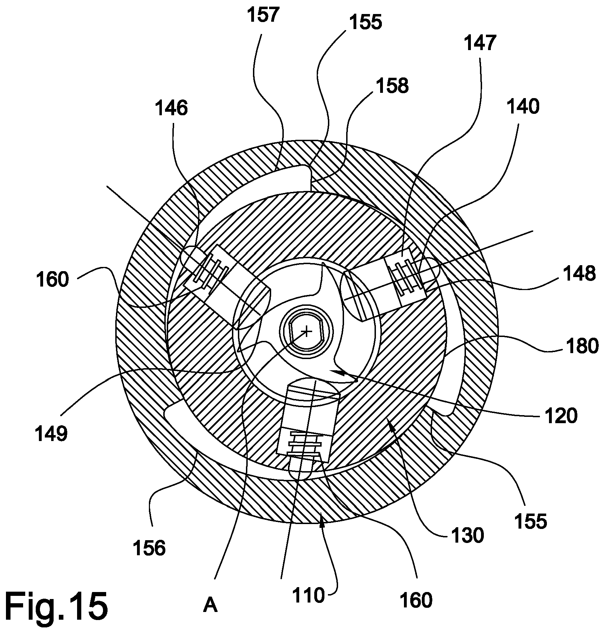

The device 1 in use is configured with the element 130 inserted into the wheel element 110, as shown in Figure 15.

The device 1 for the engagement/disengagement of the transmission between the power input device 100 and the power output device 200 is configured so as to allow the motion transmission in a single clockwise or counterclockwise direction and only from the device 100 to the device 200 and not vice versa.

In general, the device 1 for the engagement/disengagement of the transmission between the power input device 100 and the power output device 200 engages automatically and autonomously if energy arrives from the power input device 100 in the form of torque at a certain rotation speed. The device remains engaged as long as energy continues to arrive from the device 100, thus allowing the motion transmission towards the power output device 200. The device 1 autonomously and automatically disengages in the instant in which this flow of energy from the power input should be interrupted, thus also interrupting the possibility of any motion transmission towards the output. In the absence of energy from the input, device 1 remains disengaged, even if the traction/gearmotor output is induced in motion by the user. There is therefore no inverted power flow from the output to the input, i.e., from the device 200 to the device 100.

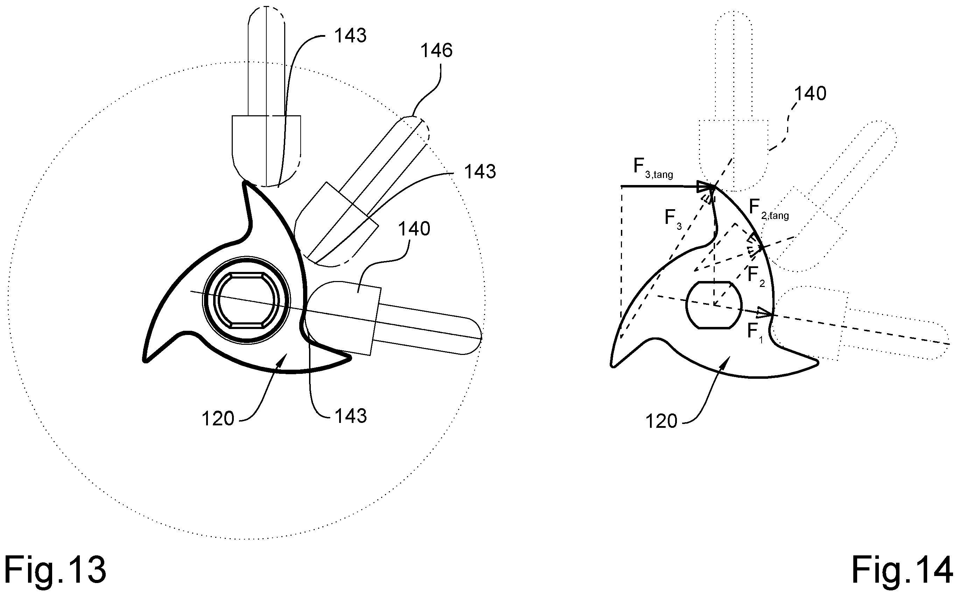

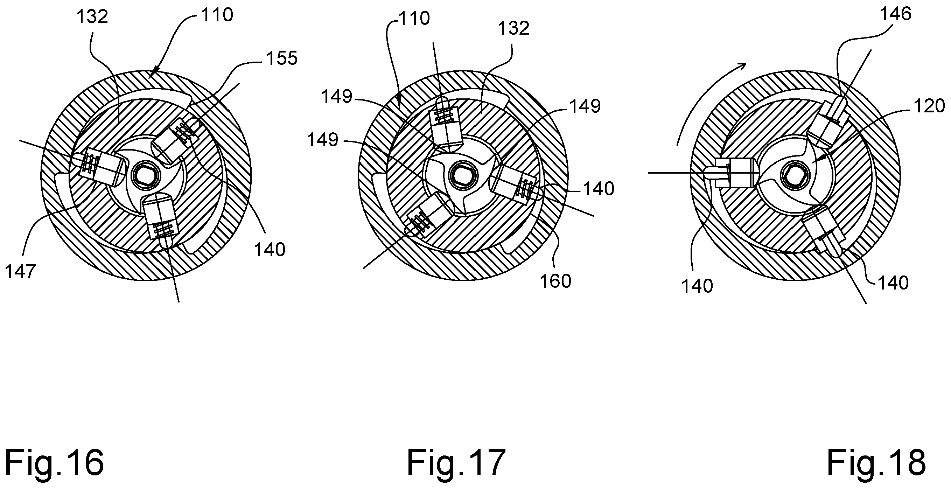

In particular, in the engagement step (Figure 17) after the resting step (Figure 16), an energy flow is activated from the power input device 100. The three-lobe cam 120, integral with the power input device 100, starts to rotate. At the same time, the wheel element 130 remains stationary, by inertia thereof and by virtue of the balancing of the moments due to all the forces involved, i.e., the force of the springs 160 and friction. Thereby, the lobes of the cam 120, which rotates with clockwise rotation, act on the lower parts 149 of the elements 140 by applying a force to slide them orthogonally with respect to the rotation axis A of the cam 120 (as shown in Figures 13, 14 and 16) overcoming the contrasting action of the springs 160. Thereby, the free ends 146 of the elements 140 protrude from the respective holes 170 of the side wall 180 (Figure 17).

At the same time, the element 130 begins to rotate since the configuration of the moments which govern the rotation thereof changes, and also drags in rotation therewith the elements 140 the free ends 141 of which slide on the side wall of the wheel element 110, which it is still stationary, until it abuts against the internal protuberances 155 (Figure 18). When this configuration has been achieved, all components lock together, becoming a single piece, integral with one another: the motion transmission becomes effective.

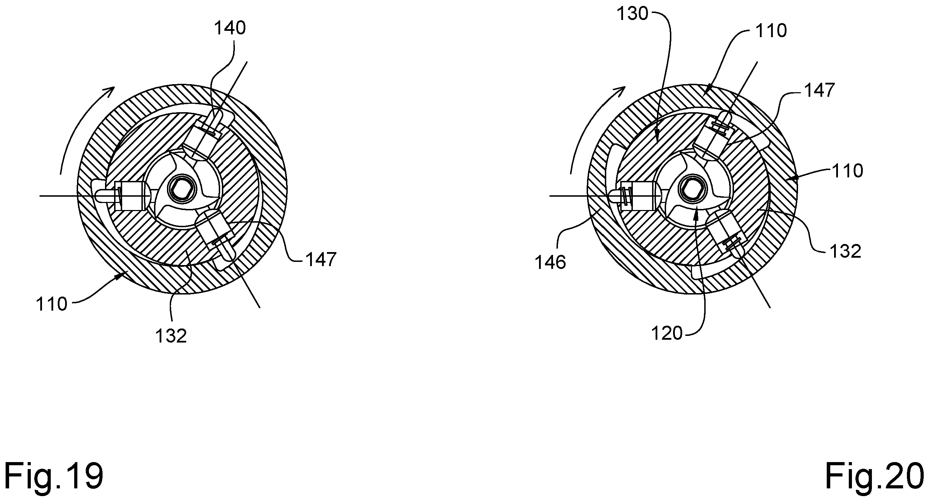

The disengagement function occurs automatically when the flow of energy from the power input device 100 is interrupted (Figure 19). In fact, when this occurs, the three-lobe cam 120 stops, since it is integral with the power input device 100. The three-lobe cam 120 stops acting on the elements 140, allowing them to return from the hole 170. In fact, the wheel element 110 continues to rotate since it is connected by means of form coupling (gears or - where absent - keying on the output member) with the wheels of the machine, which, by inertia, tends to proceed in the motion thereof, also pulling the wheel element 110. Once the action of the three-lobe cam 120 is absent, both by means of the action of the side wall 180 of the wheel element 110 combined with the counterclockwise rotation of the wheel element 110 itself and by means of the releasing action of the springs 160, the elements 140 are pushed towards the inside of the suitable compartments 147 thereof (Figure 20). Disengagement is complete.

The springs 160 help to avoid unwanted engagements when there is no flow of energy from the power input: for example, due to jolts, vibrations, etc. This, regardless of the advancement direction of the machine.

The three-lobe cam profiles are designed so that the direction of the force F impressed on the C-shaped element 14 or on the I-shaped element 140 changes slightly from the beginning of the engagement movement (F1), towards an intermediate step (F2) until the end (F3) thereof, so as to have a lower torque required during the start of the engagement movement, as shown in Figure 14. Thereby, a low load is seen by the motor at the beginning of the engagement while a transmission torque is ensured at the end of the engagement movement. In fact, the tangential force Ftang between the three-lobe cam and the C-shaped element 14 or the I-shaped element 140 grows from zero to the maximum value F3,tang thereof. The zero or almost zero value of the tangential force at the beginning of the engagement movement facilitates the movement itself, since the C-shaped element 14 or the I-shaped element 140 slides on the lobe profile with low friction.

In particular, the profiles 143 obtained on the movable C-shaped elements have a suitable shape so as to interact with the cam profile 12 with which they are in contact, so as to minimize the resisting torque seen by the cam during the very first engagement step and increasingly make it grow to allow instead the transmission of the rotation once the engagement is complete.

That is, when the cam 12 begins to rotate, there is no possibility of generating, at the cam-element interface, any tangential force component which may be configured as resistant, so that the resisting moment seen by the cam is almost zero. This fact allows the primary power source moving the mechanism not to simultaneously see sudden increases in resisting torque at the beginning of the engagement, thus avoiding sudden increases in the demand for power that may lead to issues such as vibrations, abnormal operations or even shutdowns of the machine.

Similarly, the two profiles - both on the cam side and on the C- or I-shaped element side - extend so as to be capable of exchanging a tangential force component which gradually increases by proceeding with the engagement step from the beginning up to complete engagement. Therefore, there is the possibility of motion transmission, and the power source then sees a steadily increasing resisting torque until complete engagement.

This dynamic effect corresponds to a certain shape of the triangles of forces which must be capable of being generated at the cam-movable element interface.

With reference to Figure 14:
- F1 indicates the resultant of the force exchanged between the cam and the I-shaped element at the beginning of the engagement,
- F2 indicates the resultant of the force exchanged between the cam and the I-shaped element in the intermediate engagement step,
- F3 indicates the resultant exchanged between the components themselves at engagement complete,
- Ftang,1, Ftang,2 and Ftang,3 indicate the respective tangential components with respect to the center of rotation lying on the axis A of the cam (the tangential force Ftang,1 is not indicated in Figure 14 as it is null).

The resultant F1 must pass through the center of rotation of the cam so as to have, in ideal conditions, a zero tangential component Ftang,1; similarly, F3 categorically does not have to comply with this requirement, as a component Ftang,3 is required for the motion transmission. Therefore this resultant F3 must form a certain angle with the straight line passing through the point of contact and the center of rotation of the cam. This angle, to make the engagement movement fluid, must be gradually increasing from about 0 to a maximum value, proceeding from the beginning to the end of the rotation.

The two coupled profiles are thus designed so as to achieve the above. In particular:
- at the beginning of the engagement: the straight line normal to the two surfaces and passing at the cam-element contact point must lie on a plane containing the rotation axis of the cam 12, 120. Since the resultant of the exchanged forces has a direction parallel to said normal line, this means that in ideal conditions there is no arm with respect to the axis of the cam, and therefore no resistant moment may be generated.
- at the end of the engagement: the straight line normal to the two surfaces passing through the cam-element contact point must lie on a plane not containing the rotation axis A of the cam 12, 120 and having a certain distance from the latter, which serves as an arm required to generate the moment to be transmitted.

From the above description, it is apparent that the engagement/disengagement device during the engagement step has a shape of the triangles of forces between the cam 12, 120 and the movable C- or I-shaped element adapted to contain the resisting torque seen from the power input during the initial engagement step.

## Claims

1. A device for the engagement/disengagement of the power transmission between the power input (100) and the power output (200) of a lawnmower, said device being configured for the unidirectional transmission of power from the power input to the power output of the lawnmower, wherein the power output is adapted to provide traction power to traction wheels of the lawnmower, wherein said device is configured to engage/disengage the power transmission between the power input and the power output automatically, said device comprising:
- a first rotatable element (12, 120) connected to the power input;
- a second rotatable element (11, 110) connected to the power output;
- a neutral element (13, 130) arranged between said first and said second rotatable elements, said neutral element being configured to transmit the rotation from said first rotatable element to said second rotatable element when said first rotatable element is powered for rotation from said power input, and being configured to prevent the rotation transmission between said first and second rotatable elements in the absence of power supply for the rotation from said power input, wherein the absence of said power supply interrupts the traction of the lawnmower,
**characterized in that** said first rotatable element (12, 120) is a lobe cam, said neutral element comprises a plurality of further movable elements (14, 140), each further movable element of said plurality of further movable elements (14, 140) being associated (144) with a support (131, 132) of said neutral element and being moved by said lobe cam for the engagement with an internal protrusion (15, 155) of a plurality of internal protrusions of said second rotatable element when said first rotatable element is powered for rotation from said power input.

2. A device according to claim 1, **characterized in that** the further movable elements of said plurality of further movable elements are rotatable elements (14), each rotatable element of said plurality of further rotatable elements (14) being hinged (144) for rotation on the support (131) of said neutral element and being moved by said lobe cam for the engagement with an internal protrusion (15) of a plurality of internal protrusions of said second rotatable element when said first rotatable element is powered for rotation from said power input.

3. A device according to claim 1, **characterized in that** the further movable elements of said plurality of further movable elements are sliding elements (140), each sliding element of said plurality of further sliding elements (140) being arranged for sliding in a suitable compartment (147) of said support (132) of said neutral element and being moved by said lobe cam (120) for the engagement with an internal protrusion (155) of a plurality of internal protrusions of said second rotatable element when said first rotatable element is powered for rotation from said power input.

4. A device according to claims 2 and 3, **characterized in that** said neutral element comprises a plurality of elastic means (16, 160), each configured to disengage each further element from the corresponding internal protrusion of said second rotatable element in the absence of power supply for rotation from said power input.

5. A device according to claim 4, **characterized in that** said second rotatable element (11, 110) is shaped so as to cooperate with said elastic means to disengage said further movable elements from said protrusions of said second rotatable element in the absence of power supply for rotation from said power input.

6. A device according to claim 5, **characterized in that** said second rotatable element (11, 110) comprises a side wall (150, 156) provided with curvilinear portions (151, 157) having an increasing or decreasing distance from the center between an internal protrusion (15, 155) and the next one (15, 155) of said plurality of internal protrusions.

7. A device according to claims 2 and 4, **characterized in that** each further rotatable element (14) of said plurality of further rotatable elements (14) is of the C-shaped type, having one end hinged on said support, and a free end (141) adapted to engage the corresponding internal protrusion, said support (131) comprises a circular side wall provided with a plurality of holes (17) each for the escape of said free end (141) of the further rotatable element, each elastic means being arranged between said side wall of the support and the inner part of the C of the further rotatable element.

8. A device according to claims 3 and 4, **characterized in that** each further sliding element (14) of said plurality of further sliding elements (14) is of the I-type having one end (149) adapted to engage one lobe of the lobe cam and the other end (146) adapted to engage the corresponding internal protrusion (155), said support (131) comprises a circular side wall (180) provided with a plurality of holes (170) each for the escape of said free end (146) of the further sliding element, each elastic means (160) being arranged inside each compartment (147) of the support and connected between a central part of the further sliding element and the final part (148) of the compartment.

9. A device according to claim 1, **characterized in that** it generates a shape of the triangles of forces between said lobe cam (12, 120) and each further movable element of said plurality of further movable elements (14, 140) adapted to contain the resisting torque seen from the power input in the initial step in which said first rotatable element is powered for rotation from said power input.

10. A lawnmower comprising a power input device (100), a power output device (200) and a device (1) for the engagement/disengagement of the power transmission between the power input device and the power output device as defined in any one of the preceding claims.

## Patentansprüche

1. Vorrichtung zum Ein- und Auskuppeln der Kraftübertragung zwischen dem Krafteingang (100) und dem Kraftausgang (200) eines Rasenmähers, wobei die Vorrichtung für die unidirektionale Kraftübertragung von dem Krafteingang zu dem Kraftausgang des Rasenmähers ausgebildet ist, wobei der Kraftausgang dazu ausgebildet ist, Antriebskraft an Antriebsräder des Rasenmähers zu liefern, wobei die Vorrichtung zum automatischen Ein- und Auskuppeln der Kraftübertragung zwischen dem Krafteingang und dem Kraftausgang ausgebildet ist, wobei die Vorrichtung Folgendes aufweist:
- ein erstes drehbares Element (12, 120), das mit dem Krafteingang verbunden ist;
- ein zweites drehbares Element (11, 110), das mit dem Kraftausgang verbunden ist;
- ein neutrales Element (13 , 130), das zwischen dem ersten und dem zweiten drehbaren Element angeordnet ist, wobei das neutrale Element dazu ausgebildet ist, die Rotation von dem ersten drehbaren Element auf das zweite drehbare Element zu übertragen, wenn das erste drehbare Element von dem Krafteingang rotationsmäßig angetrieben wird, und dazu ausgebildet ist, die Rotationsübertragung zwischen dem ersten und dem zweiten drehbaren Element bei fehlender Kraftzufuhr für die Rotation von dem Krafteingang zu verhindern, wobei das Fehlen der Kraftzufuhr die Traktion des Rasenmähers unterbricht,
**dadurch gekennzeichnet, dass** das erste drehbare Element (12, 120) eine Nockenscheibe ist und das neutrale Element eine Mehrzahl weiterer beweglicher Elemente (14, 140) aufweist, wobei jedes weitere bewegliche Element der Mehrzahl weiterer beweglicher Elemente (14, 140) mit einer Halterung (131, 132) des neutralen Elements verbunden (144) ist und durch die Nockenscheibe zum Zusammenwirken mit einem inneren Vorsprung (15, 155) einer Mehrzahl innerer Vorsprünge des zweiten drehbaren Elements bewegt wird, wenn das erste drehbare Element von dem Krafteingang rotationsmäßig angetrieben wird.

2. Vorrichtung nach Anspruch 1,
**dadurch gekennzeichnet, dass** die weiteren beweglichen Elemente der Mehrzahl weiterer beweglicher Elemente drehbare Elemente (14) sind, wobei jedes drehbare Element der Mehrzahl weiterer drehbarer Elemente (14) zur Rotation an der Halterung (131) des neutralen Elements angelenkt (144) ist und durch die Nockenscheibe zum Zusammenwirken mit einem inneren Vorsprung (15) einer Mehrzahl innerer Vorsprünge des zweiten drehbaren Elements bewegt wird, wenn das erste drehbare Element von dem Krafteingang rotationsmäßig angetrieben wird.

3. Vorrichtung nach Anspruch 1,
**dadurch gekennzeichnet, dass** die weiteren beweglichen Elemente der Mehrzahl weiterer beweglicher Elemente Gleitelemente (140) sind, wobei jedes Gleitelement der Mehrzahl weiterer Gleitelemente (140) zum Gleiten in einem geeigneten Raum (147) der Halterung (132) des neutralen Elements angeordnet ist und durch die Nockenscheibe (120) zum Zusammenwirken mit einem inneren Vorsprung (155) einer Mehrzahl innerer Vorsprünge des zweiten drehbaren Elements bewegt wird, wenn das erste drehbare Element von dem Krafteingang rotationsmäßig angetrieben wird.

4. Vorrichtung nach Anspruch 2 und 3,
**dadurch gekennzeichnet, dass** das neutrale Element eine Mehrzahl elastischer Einrichtungen (16, 160) aufweist, die jeweils dazu ausgebildet sind, jedes weitere Element von dem entsprechenden inneren Vorsprung des zweiten drehbaren Elements lösen, wenn keine Kraftzufuhr zur Rotation von dem Krafteingang vorhanden ist.

5. Vorrichtung nach Anspruch 4,
**dadurch gekennzeichnet, dass** das zweite drehbare Element (11, 110) derart geformt ist, dass es mit den elastischen Einrichtungen zusammenwirkt, um die weiteren beweglichen Elemente von den Vorsprüngen des zweiten drehbaren Elements zu lösen, wenn keine Kraftzufuhr zur Rotation von dem Krafteingang vorhanden ist.

6. Vorrichtung nach Anspruch 5,
**dadurch gekennzeichnet, dass** das zweite drehbare Element (11, 110) eine Seitenwand (150, 156) aufweist, die mit gekrümmten Bereichen (151, 157) versehen ist, die einen zunehmenden oder abnehmenden Abstand von der Mitte zwischen einem inneren Vorsprung (15, 155) und dem nächsten der Mehrzahl von inneren Vorsprüngen (15, 155) aufweisen.

7. Vorrichtung nach Anspruch 2 und 4,
**dadurch gekennzeichnet, dass** jedes weitere drehbare Element (14) der Mehrzahl weiterer drehbarer Elemente (14) C-förmig ist und ein Ende aufweist, das an der Halterung angelenkt ist, sowie ein freies Ende (141) aufweist, das zum Zusammenwirken mit dem entsprechenden inneren Vorsprung ausgebildet ist, wobei die Halterung (131) eine kreisförmige Seitenwand aufweist, die mit einer Mehrzahl von Öffnungen (17) versehen ist, durch die jeweils das freie Ende (141) des weiteren drehbaren Elements austreten kann, wobei jede elastische Einrichtung zwischen der Seitenwand der Halterung und dem inneren Teil der C-Form des weiteren drehbaren Elements angeordnet ist.

8. Vorrichtung nach Anspruch 3 und 4,
**dadurch gekennzeichnet, dass** jedes weitere Gleitelement (14) der Mehrzahl weiterer Gleitelemente (14) I-förmig ist und ein Ende (149) aufweist, das zum Zusammenwirken mit einem Nockenelement der Nockenscheibe ausgebildet ist, und das andere Ende (146) zum Zusammenwirken mit dem entsprechenden inneren Vorsprung (155) ausgebildet ist, wobei die Halterung (131) eine kreisförmige Seitenwand (180) aufweist, die mit einer Mehrzahl von Öffnungen (170) versehen ist, durch die jeweils das freie Ende (146) des weiteren Gleitelements austreten kann, wobei die elastischen Einrichtungen (160) innerhalb eines jeweiligen Raums (147) der Halterung angeordnet sind und zwischen einen zentralen Teil des weiteren Gleitelements und den finalen Teil (148) des Raums geschaltet sind.

9. Vorrichtung nach Anspruch 1,
**dadurch gekennzeichnet, dass** sie eine Form von Kräftedreiecken zwischen der Nockenscheibe (12, 120) und jedem weiteren beweglichen Element der Mehrzahl weiterer beweglicher Elemente (14, 140) erzeugt, die dazu ausgebildet ist, das Widerstandsdrehmoment einzudämmen, das von dem Krafteingang in dem Anfangsschritt ausgeht, in dem das erste drehbare Element von dem Krafteingang rotationsmäßig angetrieben wird.

10. Rasenmäher mit einer Krafteingangsvorrichtung (100), einer Kraftausgangsvorrichtung (200) und einer Vorrichtung (1) zum Ein- und Auskuppeln der Kraftübertragung zwischen der Krafteingangsvorrichtung und der Kraftausgangsvorrichtung gemäß einem der vorhergehenden Ansprüche.

## Revendications

1. Dispositif pour la mise en prise / le dégagement de la transmission de puissance entre l'entrée de puissance (100) et la sortie de puissance (200) d'une tondeuse à gazon, ledit dispositif étant configuré pour la transmission unidirectionnelle de puissance de l'entrée de puissance à la sortie de puissance de la tondeuse à gazon, dans lequel la sortie de puissance est adaptée pour fournir la puissance de traction aux roues de traction de la tondeuse à gazon, dans lequel ledit dispositif est configuré pour mettre en prise / dégager automatiquement la transmission de puissance entre l'entrée de puissance et la sortie de puissance, ledit dispositif comprenant :
un premier élément rotatif (12, 120) raccordé à l'entrée de puissance ;
un deuxième élément rotatif (11, 110) raccordé à la sortie de puissance ;
un élément neutre (13, 130) agencé entre ledit premier et ledit deuxième élément rotatif, ledit élément neutre étant configuré pour transmettre la rotation dudit premier élément rotatif audit deuxième élément rotatif, lorsque le premier élément rotatif est alimenté pour la rotation à partir de ladite entrée de puissance, et étant configuré pour empêcher la transmission de rotation entre lesdits premier et deuxième éléments rotatifs en l'absence d'alimentation électrique pour la rotation à partir de ladite entrée de puissance, dans lequel l'absence de ladite alimentation électrique interrompt la traction de la tondeuse à gazon,
**caractérisé en ce que** ledit premier élément rotatif (12, 120) est une came à lobes, ledit élément neutre comprend une pluralité d'éléments mobiles supplémentaires (14, 140), chaque élément mobile supplémentaire de ladite pluralité d'éléments mobiles supplémentaires (14, 140) étant associé (144) avec un support (131, 132) dudit élément neutre et étant déplacé par ladite came à lobes pour la mise en prise avec une saillie interne (15, 155) d'une pluralité de saillies internes dudit deuxième élément rotatif lorsque ledit premier élément rotatif est alimenté pour la rotation à partir de ladite entrée de puissance.

2. Dispositif selon la revendication 1, **caractérisé en ce que** les éléments mobiles supplémentaires de ladite pluralité d'éléments mobiles supplémentaires sont des éléments rotatifs (14), chaque élément rotatif de ladite pluralité d'éléments rotatifs supplémentaires (14) étant articulé (144) pour la rotation sur le support (131) dudit élément neutre et étant déplacé par ladite came à lobes pour la mise en prise avec une saillie interne (15) d'une pluralité de saillies internes dudit deuxième élément rotatif lorsque ledit premier élément rotatif est alimenté pour la rotation à partir de ladite entrée de puissance.

3. Dispositif selon la revendication 1, **caractérisé en ce que** les éléments mobiles supplémentaires de ladite pluralité d'éléments mobiles supplémentaires sont des éléments coulissants (140), chaque élément coulissant de ladite pluralité d'éléments coulissants (140) supplémentaires étant agencé pour coulisser dans un compartiment (147) approprié dudit support (132) dudit élément neutre et étant déplacé par ladite came à lobes (120) pour la mise en prise avec une saillie interne (155) d'une pluralité de saillies internes dudit deuxième élément rotatif lorsque ledit premier élément rotatif est alimenté pour la rotation à partir de ladite entrée de puissance.

4. Dispositif selon les revendications 2 et 3, **caractérisé en ce que** ledit élément neutre comprend une pluralité de moyens élastiques (16, 160), chacun configuré pour dégager chaque élément supplémentaire de la saillie interne correspondante dudit deuxième élément rotatif en l'absence d'alimentation électrique pour la rotation à partir de ladite entrée de puissance.

5. Dispositif selon la revendication 4, **caractérisé en ce que** ledit deuxième élément rotatif (11, 110) est formé afin de coopérer avec lesdits moyens élastiques pour dégager lesdits autres éléments mobiles desdites saillies dudit deuxième élément rotatif en l'absence d'alimentation électrique pour la rotation à partir de ladite entrée de puissance.

6. Dispositif selon la revendication 5, **caractérisé en ce que** ledit deuxième élément rotatif (11, 110) comprend une paroi latérale (150, 156) prévue avec des parties curvilignes (151, 157) ayant une distance croissante ou décroissante par rapport au centre entre une saillie interne (15, 155) et la suivante (15, 155) de ladite pluralité de saillies internes.

7. Dispositif selon les revendications 2 et 4, **caractérisé en ce que** chaque élément rotatif supplémentaire (14) de ladite pluralité d'éléments rotatifs supplémentaires (14) est de type en forme de C, ayant une extrémité articulée sur ledit support, et une extrémité libre (141) adaptée pour mettre en prise la saillie interne correspondante, ledit support (131) comprend une paroi latérale circulaire prévue avec une pluralité de trous (17), chacun pour la fuite de ladite extrémité libre (141) de l'élément rotatif supplémentaire, chaque moyen élastique étant agencé entre ladite paroi latérale du support et la partie interne du C de l'élément rotatif supplémentaire.

8. Dispositif selon les revendications 3 et 4, **caractérisé en ce que** chaque élément coulissant supplémentaire (14) de ladite pluralité d'éléments coulissants supplémentaires (14) est du type en I ayant une extrémité (149) adaptée pour mettre en prise un lobe de la came à lobes et l'autre extrémité (146) adaptée pour mettre en prise la saillie interne (155) correspondante, ledit support (131) comprend une paroi latérale circulaire (180) prévue avec une pluralité de trous (170), chacun pour la fuite de ladite extrémité libre (146) de l'élément coulissant supplémentaire, chaque moyen élastique (160) étant agencé à l'intérieur de chaque compartiment (147) du support et raccordé entre une partie centrale de l'élément coulissant supplémentaire et la partie finale (148) du compartiment.

9. Dispositif selon la revendication 1, **caractérisé en ce qu'**il génère une forme des triangles de forces entre ladite came de lobe (12, 120) et chaque élément mobile supplémentaire de ladite pluralité d'éléments mobiles supplémentaires (14, 140) étant adapté pour contenir le couple de résistance observé à partir de l'entrée de puissance à l'étape initiale dans laquelle ledit premier élément rotatif est alimenté pour la rotation à partir de ladite entrée de puissance.

10. Tondeuse à gazon comprenant un dispositif d'entrée de puissance (100), un dispositif de sortie de puissance (200) et un dispositif (1) pour la mise en prise / le dégagement de la transmission de puissance entre le dispositif d'entrée de puissance et le dispositif de sortie de puissance selon l'une quelconque des revendications précédentes.
